# EUROPÄISCHE PATENTSCHRIFT

(11) **EP 2 795 778 B1**
(45) Veröffentlichungstag und Bekanntmachung des Hinweises auf die Patenterteilung: **03.06.2020**
(21) Anmeldenummer: 12813329.5
(22) Anmeldetag: 19.12.2012
(51) Int. Cl.: H02M 1/08, H02M 1/32

(54) **STROMRICHTER ZUM ANSTEUERN EINER ELEKTRISCHEN MASCHINE UND FAHRZEUG MIT EINEM STROMRICHTER**
RECTIFIER FOR ACTUATING AN ELECTRIC MACHINE AND VEHICLE HAVING A RECTIFIER
CONVERTISSEUR DE COURANT POUR COMMANDER UN MOTEUR ÉLECTRIQUE ET VÉHICULE POURVU D'UN CONVERTISSEUR DE COURANT

(30) Priorität: 23.12.2011 DE 102011089877
(43) Veröffentlichungstag der Anmeldung: 29.10.2014
(73) Patentinhaber: Conti Temic microelectronic GmbH, 90411 Nürnberg (DE)
(72) Erfinder: WINKLER, Karl-Heinz, 90518 Altdorf / Rasch (DE)
(74) Vertreter: Bonn, Roman Klemens
(86) Internationale Anmeldenummer: PCT/EP2012/076159
(87) Internationale Veröffentlichungsnummer: WO 2013/092717

(56) Entgegenhaltungen:
- EP-A1- 1 768 251
- US-A1- 2005 134 357
- US-A1- 2010 213 988

## Beschreibung

Die Erfindung betrifft einen Stromrichter zum Ansteuern einer elektrischen Maschine, insbesondere eines Synchronmotors. Darüber hinaus betrifft die Erfindung ein Fahrzeug mit einem derartigen Stromrichter.
Elektrische Maschinen, wie beispielsweise Synchronmotoren, können über Stromrichter, die einen Gleichstrom in einen Wechselstrom für den Antrieb der elektrischen Maschinen umwandeln, angetrieben werden. Übliche Stromrichter weisen Halbleiterschalter, wie beispielsweise Transistoren, auf, die in einer B6-Brücke angeordnet sein können. Bei den bisher üblichen Ansteuerverfahren werden die Ansteuersignale zum Schalten der Halbleiterschalter als statische Pegel übertragen. Das bedeutet, dass ein niedriger Pegel (beispielsweise 0 Volt oder niedriges Potential) zu einem ausgeschalteten, stromsperrenden Halbleiterschalter führt, und ein hoher Pegel (beispielsweise 5 Volt oder hohes Potential) zu einem eingeschalteten bzw. stromleitenden oder durchschaltenden Halbleiterschalter führt. Bei einem Ausfall der Ansteuerung ist ein wahrscheinlicher Fehler der Ausfall der Versorgungsspannung und damit aller Ansteuersignale zum Ansteuern der Halbleiterschalter. Normalerweise führt dieser Fehler dazu, dass alle Halbleiterschalter gesperrt sind. Eine drehende elektrische Maschine arbeitet dann als Generator und kann je nach Drehzahl Überspannung erzeugen, welche zu einer Zerstörung der Elektronik führen kann.

Patentdokument US 2005/134357 A1 offenbart eine Treiberschaltung, die über Zwischensignale mit einem oszillierenden und einem statischen Signalzustand zwei Ausgangssignale erzeugt, entsprechend dem Oberbegriff der unabhängigen Ansprüche. Der Erfindung liegt die Aufgabe zugrunde, einen Stromrichter zum Ansteuern einer elektrischen Maschine mit einer einfachen Absicherung gegen Fehlerfälle bereitzustellen.
Diese Aufgabe wird durch den Gegenstand der unabhängigen Patentansprüche gelöst. Vorteilhafte Ausführungsformen der vorliegenden Erfindung sind in den abhängigen Patentansprüchen beschrieben.

Gemäß einem ersten Aspekt der Erfindung wird ein Stromrichter zum Ansteuern einer elektrischen Maschine, insbesondere eines Synchronmotors, bereitgestellt, wobei der Stromrichter einen ersten, insbesondere negativspannungsseitigen (auf Englisch "low-side"), Halbleiterschalter aufweist. Der Stromrichter umfasst ferner eine Steuerschaltung zum Ansteuern des ersten Halbleiterschalters. Dabei umfasst die Steuerschaltung einen Signaleingang zum Empfangen eines Eingangssignals, insbesondere eines pulsweitenmodulierten Eingangssignals, das einen ersten und einen zweiten Signalzustand aufweist. Weiterhin umfasst die Steuerschaltung eine erste Schaltungseinheit zum Erzeugen eines ersten Zwischensignals basierend auf dem Eingangssignal, wobei das erste Zwischensignal einen ersten oszillierenden und einen ersten statischen Signalzustand aufweist. Außerdem umfasst die Steuerschaltung eine zweite Schaltungseinheit zum Erzeugen eines ersten Ansteuersignals basierend auf dem ersten Zwischensignal zum Ansteuern des ersten Halbleiterschalters, wobei das erste Ansteuersignal einen dritten und einen vierten von dem dritten Signalzustand abweichenden Signalzustand aufweist. Dabei ist die erste Schaltungseinheit so ausgeführt, dass diese bei Vorliegen des ersten Signalzustands des Eingangssignals das erste Zwischensignal mit dem ersten oszillierenden Signalzustand erzeugt. Bei Vorliegen des zweiten Signalzustands des Eingangssignals erzeugt die erste Schaltungseinheit dann das erste Zwischensignal mit dem ersten statischen Signalzustand. Analog ist die zweite Schaltungseinheit so ausgeführt, dass diese bei Vorliegen des ersten oszillierenden Signalzustands des ersten Zwischensignals das erste Ansteuersignal mit dem dritten Signalzustand erzeugt. Bei Vorliegen des ersten statischen Signalzustands des ersten Zwischensignals erzeugt die zweite Schaltungseinheit das erste Ansteuersignal mit dem vierten Signalzustand.

Der erste, vorzugsweise negativspannungsseitige, Halbleiterschalter ist vorzugsweise derart ausgeführt, dass dieser bei Vorliegen des dritten Signalzustands des ersten Ansteuersignals einen offenen stromsperrenden Schaltzustand, und bei Vorliegen des vierten Signalzustands des ersten Ansteuersignals einen geschlossenen stromleitenden Schaltzustand einnimmt.

Vorzugsweise ist die zweite Schaltungseinheit ausgeführt, beim Wegfall des ersten Zwischensignals das erste Ansteuersignal mit dem vierten Signalzustand zu erzeugen.

Dieser Aspekt der Erfindung basiert auf der Idee, eine Möglichkeit bereitzustellen, im Falle eines Fehlers in dem Stromrichter, wie zum Beispiel beim Wegfallen des Eingangssignals, das zum Generieren der Ansteuersignale zum Ansteuern der elektrischen Maschine erforderlich ist, den ersten, vorzugsweise negativspannungsseitigen, Halbleiterschalter einfach und sicher in gewünschten, vorzugsweise geschlossenen, Schaltzustand zu schalten. Auf diese Weise kann eine elektrische Verbindung von der elektrischen Maschine über diesen geschlossenen Halbleiterschalter zu einer der Stromversorgungleitungen des Stromrichters, und vorzugsweise weiter zur Masse, hergestellt werden, wobei die Wicklungen der im oben genannten Fehlerfall als Generator arbeitenden elektrischen Maschine einfach und sicher auf einem Bezugsspannungspotential, insb. auf dem Massenpotential, gehalten werden, sodass keine Überspannungen in den Wicklungen entstehen können, welche Schäden in dem Stromrichter einrichten können.

Damit ist es nicht nötig, im Fehlerfall aktiv ein Signal auszugeben, um den Halbleiterschalter zu einem für die elektrische Maschine und den Stromrichter sicheren Schaltzustand zu bringen. Dieser sichere Schaltzustand wird im Fehlerfall, in dem zum Beispiel das Eingangssignal wegbleibt oder die erste Steuereinheit defekt ist und somit kein Zwischensignal erzeugt, vielmehr automatisch erreicht. Die elektrische Maschine und der Stromrichter können somit in einfacher Weise gegen mögliche Fehlerfälle abgesichert werden.

Unter einem "Signalzustand eines Signals" wird im Rahmen dieser Anmeldung ein Signalzustand verstanden, bei dem das Signal einen bestimmten Signalpegel oder einen bestimmten Signalverlauf, wie z. B. eine Signalpegelveränderung, aufweist. Unter einem "statischen Signalzustand eines Signals" wird im Rahmen dieser Beschreibung ein Signalzustand verstanden, bei dem das Signal einen weitgehend konstanten Signalverlauf bzw. Signalpegel, also einen "statischen Signalpegel", aufweist. Eine Kennlinie eines solchen Signals bzw. Pegels weist keine Steigung auf. Im Gegensatz dazu wird unter einem "oszillierenden Signalzustand eines Signals" im Rahmen dieser Beschreibung ein Signalzustand verstanden, bei dem das Signal einen oszillierenden bzw. alternierenden Signalverlauf aufweist, d.h. einen Signalverlauf, der zwischen zumindest zwei Signalpegelwerten, beispielsweise zwischen "logisch Null" und "logisch Eins" bzw. zwischen 0 Volt und 5 Volt, ständig und vorzugsweise mit einer hohen Frequenz schwankt.

Unter Fehlerfall kann in diesem Zusammenhang jede Art von Fehler in der Ansteuerung der elektrischen Maschine einschließlich bei dem Stromrichter verstanden werden, die dazu führt, dass die Ansteuerung nicht mehr ordnungsgemäß funktioniert. Dies können beispielsweise ein Stromausfall oder extreme Schwankungen in der Spannungsversorgung für den Stromrichter sein, was dazu führt, dass das Eingangssignal zum Ansteuern des Halbleiterschalters ausfällt.

Der oszillierende Signalzustand lässt sich zum Beispiel mittels eines Oszillators auf einfache Weise erzeugen. Hierbei kann insbesondere ein freilaufender Oszillator verwendet werden. Ein freilaufender Oszillator kann beispielsweise mittels Schmitt-Triggern aufgebaut werden. Unter einem freilaufenden Oszillator wird ein Oszillator verstanden, der ohne Phasenregelschleife aufgebaut ist, im Gegensatz zu einem Oszillator, der mittels einer Phasenregelschleife (PLL) stabilisiert wird.

Gemäß der Erfindung umfasst der Stromrichter ferner einen zweiten, insbesondere positivspannungsseitigen (auf Englisch "high-side"), Halbleiterschalter. Dabei ist die zweite Schaltungseinheit ferner zum Erzeugen eines zweiten Ansteuersignals basierend auf dem ersten Zwischensignal zum Ansteuern des zweiten Halbleiterschalters ausgebildet. Dabei ist die zweite Schaltungseinheit so ausgeführt, dass diese bei Vorliegen des ersten oszillierenden Signalzustands des ersten Zwischensignals das zweite Ansteuersignal mit einem fünften Signalzustand, und bei Vorliegen des ersten statischen Signalzustands des Zwischensignals das zweite Ansteuersignal mit einem sechsten, von dem fünften Signalzustand abweichenden Signalzustand erzeugt.
Der zweite, vorzugsweise positivspannungsseitige, Halbleiterschalter ist vorzugsweise derart ausgeführt, dass dieser bei Vorliegen des fünften Signalzustands des zweiten Ansteuersignals einen geschlossenen stromleitenden Schaltzustand, und bei Vorliegen des sechsten Signalzustands des zweiten Ansteuersignals einen offenen stromsperrenden Schaltzustand einnimmt.
Vorzugsweise ist die zweite Schaltungseinheit derart ausgeführt, dass diese beim Wegfall des ersten Zwischensignals das zweite Ansteuersignal mit dem sechsten Signalzustand zu erzeugen.
Dadurch ist es möglich, den zweiten, vorzugsweise positivspannungsseitigen, Halbleiterschalter im Falle eines Fehlers in dem Stromrichter, wie zum Beispiel beim Wegfall des Eingangssignals, einfach und sicher in sicheren offenen Schaltzustand zu schalten. Auf diese Weise kann ein Brückenkurzschluss einer Halbbrücke der B6-Brückenschaltung verhindert werden.

Gemäß einer zu der oben beschriebenen Schaltung alternativen Lösung der Erfindung umfasst der Stromrichter den oben genannten

zweiten, insbesondere positivspannungsseitigen, Halbleiterschalter. Dabei ist die erste Schaltungseinheit ferner zum Erzeugen eines zweiten Zwischensignals basierend auf dem Eingangssignal ausgebildet, wobei das zweite Zwischensignal einen zweiten oszillierenden und einen zweiten statischen Signalzustand aufweist. Die zweite Schaltungseinheit ist zum Erzeugen des zweiten Ansteuersignals basierend auf dem zweiten Zwischensignal zum Ansteuern des zweiten Halbleiterschalters ausgebildet, wobei das zweite Ansteuersignal den fünften und den sechsten von dem fünften Signalzustand abweichenden Signalzustand aufweist. Dabei ist die erste Schaltungseinheit ferner ausgeführt, bei Vorliegen des ersten Signalzustands des Eingangssignals das zweite Zwischensignal mit dem zweiten oszillierenden Signalzustand, und bei Vorliegen des zweiten Signalzustands des Eingangssignals das zweite Zwischensignal mit dem zweiten statischen Signalzustand zu erzeugen. Die zweite Schaltungseinheit ist zudem ausgeführt, bei Vorliegen des zweiten oszillierenden Signalzustands des zweiten Zwischensignals das zweite Ansteuersignal mit dem fünften Signalzustand, und bei Vorliegen des zweiten statischen Signalzustands des zweiten Zwischensignals das zweite Ansteuersignal mit dem sechsten Signalzustand zu erzeugen.

Der zweite, vorzugsweise positivspannungsseitige, Halbleiterschalter ist in dieser Ausgestaltung vorzugsweise auch derart ausgeführt, dass dieser bei Vorliegen des fünften Signalzustands des zweiten Ansteuersignals einen geschlossenen stromleitenden Schaltzustand, und bei Vorliegen des sechsten Signalzustands des zweiten Ansteuersignals einen offenen stromsperrenden Schaltzustand einnimmt.

Vorzugsweise ist die zweite Schaltungseinheit derart ausgeführt, dass diese beim Wegfall des ersten Zwischensignals und/oder des zweiten Zwischensignals das zweite Ansteuersignal mit dem sechsten Signalzustand zu erzeugen.

Dadurch, dass zwei voneinander unabhängige Zwischensignale generiert und die beiden Ansteuersignale jeweils von diesen beiden voneinander unabhängigen Zwischensignalen erzeugt werden, kann eine redundante Sicherheit erzielt werden, wobei bei Ausfall eines der beiden Zwischensignale das übriggebliebene Zwischensignal bzw. das aus diesem übriggebliebenen Zwischensignal erzeugte Ansteuersignal die elektrische Maschine und den Stromrichter zuverlässig zu einem sicheren Zustand bringen kann.

Gemäß der Erfindung umfasst der Stromrichter bzw. die zweite Schaltungseinheit ferner eine Invertierungseinheit, welche ausgeführt ist, das zweite Ansteuersignal gegenüber dem ersten Ansteuersignal stets zu invertieren. Vorzugsweise umfasst die Invertierungseinheit ein einfaches und kostengünstiges XOR-Gatter, oder ist die Invertierungseinheit als ein XOR-Gatter ausgebildet.
Auf diese Weise können der erste positivspannungsseitige und der zweite negativspannungsseitige Halbleiterschalter im oben genannten Fehlerfall stets zueinander invers geschaltet werden. Nämlich während der erste vorzugsweise negativspannungsseitige Halbleiterschalter im Fehlerfall geschlossen bzw. in einem geschlossenen Schaltzustand gehalten wird, wird der zweite vorzugsweise positivspannungsseitige Halbleiterschalter immer geöffnet bzw. im offenen Schaltzustand gehalten. Dadurch wird der Stromrichter im Fehlerfall sicher von der elektrischen Maschine getrennt, wobei kein Strom von der elektrischen Maschine in den Stromrichter fließen kann.

Gemäß einem weiteren Aspekt der Erfindung wird eine Motorsteuerung bereitgestellt, wobei die Motorsteuerung einen oben beschriebenen Stromrichter zum Ansteuern einer elektrischen Maschine aufweist.

Gemäß einem weiteren Aspekt der Erfindung wird ein Fahrzeug, insbesondere ein Hybrid- oder Elektrofahrzeug, mit einer elektrischen Maschine zum Antrieb bereitgestellt, das einen oben beschriebenen Stromrichter zum Ansteuern der elektrischen Maschine aufweist.

Weitere Vorteile und Merkmale der vorliegenden Erfindung ergeben sich aus der folgenden beispielhaften Beschreibung bevorzugter Ausführungsformen. Die einzelnen Figuren der Zeichnung dieser Anmeldung sind lediglich als schematisch und als nicht maßstabsgetreu anzusehen.
Figur 1 zeigt ein Elektrofahrzeug mit einem Stromrichter gemäß einer beispielhaften Ausführungsform der Erfindung.
Figur 2 zeigt den Stromrichter gemäß der beispielhaften Ausführungsform der Erfindung.
Figur 3 zeigt eine erste Schaltungseinheit einer Steuerschaltung des Stromrichters gemäß der beispielhaften Ausführungsform der Erfindung.
Figur 4 zeigt eine zweite Schaltungseinheit der Steuerschaltung des Stromrichters gemäß der beispielhaften Ausführungsform der Erfindung.
Figur 5 zeigt verschiedene Signale der Steuerschaltung in Signaldiagrammen.

Es wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

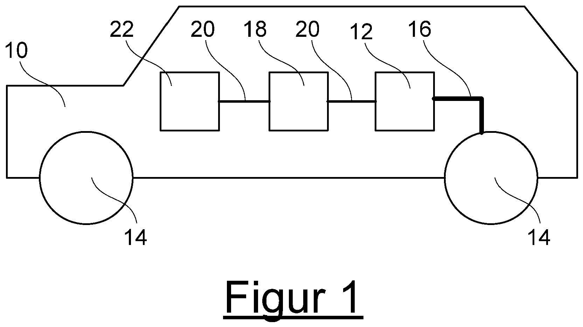

Figur 1 zeigt ein Elektrofahrzeug 10 mit Rädern 14 und einer elektrischen Maschine 12 als Antrieb des Elektrofahrzeugs 10. Das Elektrofahrzeug 10 umfasst ferner eine Antriebswelle 16, welche mechanische Rotationsenergie der elektrischen Maschine 12 an die Räder 14 zu deren Vortrieb weiterleitet. Das Elektrofahrzeug 10 umfasst außerdem einen Stromrichter 18, der über eine elektrische Leitung 20 mit der elektrischen Maschine 12 und über eine weitere elektrische Leitung 20 mit einer Traktionsbatterie 22 verbunden ist Die Traktionsbatterie 22 ist zum Speichern und Bereitstellen elektrischer Energie für die elektrischen Maschine 12 für dessen Betrieb vorgesehen. Beim Betrieb des Elektrofahrzeugs 10 wandelt der Stromrichter 18 die von der Traktionsbatterie 22 in Form von einem Gleichstrom bereitgestellte elektrische Energie in einen Wechselstrom zum Betrieb der elektrischen Maschine 12 um und führt den Wechselstrom der elektrischen Maschine 12 zu. Von diesem Wechselstrom betrieben erzeugt die elektrische Maschine 12 mechanische Rotationsenergie, welche die Räder 14 in Drehbewegung versetzt.

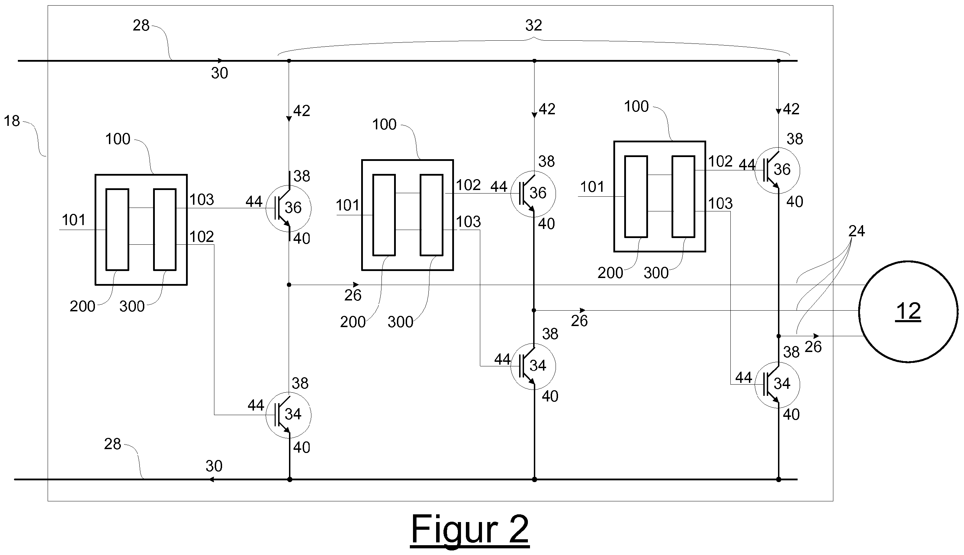

Figur 2 zeigt den Stromrichter 18 in einer detaillierten schematischen Darstellung. Der Stromrichter 18 ist über drei Stromphasen 24 mit der elektrischen Maschine 12 elektrisch verbunden und versorgt diesen mit drei Phasenströme 26 über die Stromphasen 24.

Dabei wandelt der Stromrichter 18 den von der Traktionsbatterie 22 bereitgestellten und über Stromversorgungsleitungen 28 erhaltenen Gleichstrom 30 in die Phasenströme 26 um und führt diese Phasenströme 26 der elektrischen Maschine 12 zu. Hierzu umfasst der Stromrichter 18 eine B6-Brückenschaltung 32 mit jeweils einem negativspannungsseitigen (auf Englisch "low-side") Halbleiterschalter 34 und einem positivspannungsseitigen (auf Englisch "high-side") Halbleiterschalter 36 jeweils in einer Halbbrücke.

Die sechs Halbleiterschalter 34, 36 sind in dieser Ausführungsform als n-Kanal IGBT (Bipolartransistor mit isolierter Gate-Elektrode) ausgebildet und umfassen jeweils einen Kollektor-Anschluss als einen Eingangsstromanschluss 38, einen Emitter-Anschluss als einen Ausgangsstromanschluss 40 und zwischen dem Eingangsstromanschluss 38 und dem Ausgangsstromanschluss 40 eine Laststrecke zum Durchleiten eines Laststromes 42 zu der elektrischen Maschine 12 als Phasenstrom 26. Die Halbleiterschalter 34, 36 weisen ferner jeweils einen Gate-Anschluss als einen Steueranschluss 44 auf, über den die jeweiligen Halbleiterschalter 34, 36 angesteuert den Durchfluss des jeweiligen Laststroms 42 durch die jeweilige Laststrecke ermöglichen oder sperren.

Zu jedem Paar aus einem negativspannungsseitigen Halbleiterschalter 34 und einem positivspannungsseitigen Halbleiterschalter 36 einer Halbbrücke weist der Stromrichter 18 jeweils eine Steuerschaltung 100 zur Steuerung des jeweiligen negativspannungsseitigen und des jeweiligen positivspannungsseitigen Halbleiterschalters 34, 36 auf.

Die Steuerschaltung 100 weist einen Signaleingang 101 zum Empfangen eines Eingangssignals 501 auf. Des Weiteren weist die Steuerschaltung 100 einen ersten Signalausgang 102 zum Bereitstellen eines ersten Ansteuersignals 502 zum Ansteuern des negativspannungsseitigen Halbleiterschalters 34 und einen zweiten Signalausgang 103 zum Bereitstellen eines zweiten Ansteuersignals 503 zum Ansteuern des positivspannungsseitigen Halbleiterschalters 36. Zwischen dem Signaleingang 101 und den beiden Signalausgängen 102, 103 weist die Steuerschaltung 100 eine erste Schaltungseinheit 200 und eine zweite Schaltungseinheit 300 zum Erzeugen des ersten und des zweiten Ansteuersignals 502, 503 auf.

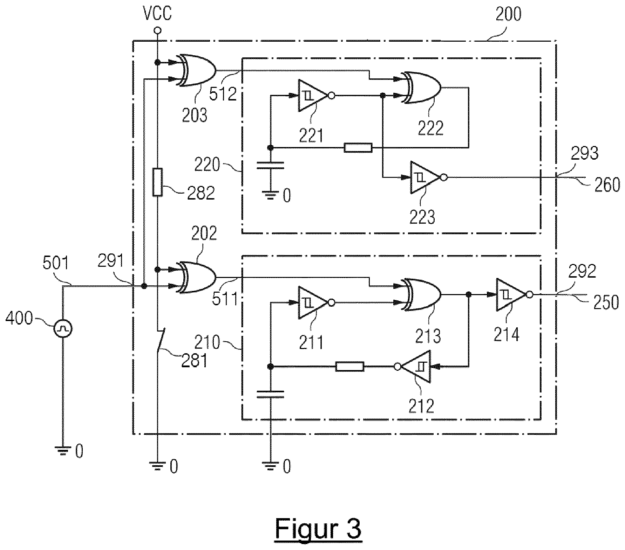

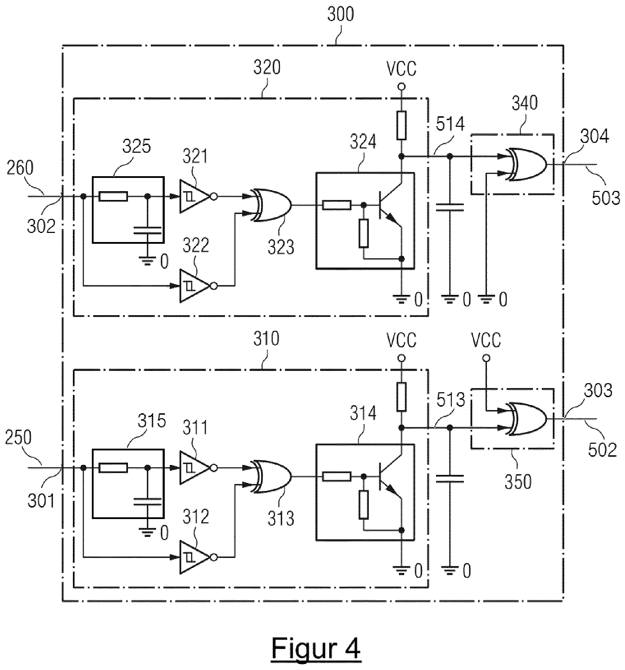

Im Folgenden wird in Zusammenhang mit den Figuren 3 und 4 eine beispielhafte Realisierung dieser Steuerschaltung 100 bzw. die erste und die zweite Schaltungseinheit 200, 300 der Steuerschaltung 100 beschrieben.

Figur 3 zeigt die erste Schaltungseinheit 200 der Steuerschaltung 100 zum Erzeugen eines ersten und einem zweiten Zwischensignals 250, 260.

Die erste Schaltungseinheit 200 umfasst einen Signaleingang 291 zum Erhalten eines pulsweitenmodulierten Eingangssignals 501 von einem Signalgenerator 400, einen ersten Signalausgang 292 zum Bereitstellen des ersten Zwischensignals 250 und einen zweiten Signalausgang 293 zum Bereitstellen des zweiten Zwischensignals 260. Der Signaleingang 291 der ersten Schaltungseinheit 200 ist direkt mit dem Signaleingang 101 der Steuerschaltung 100 elektrisch verbunden. Zwischen dem Signaleingang 291 und dem ersten Signalausgang 292 weist die erste Schaltungseinheit 200 eine erste Pegelerzeugungseinheit 210 zum Erzeugen des ersten Zwischensignals 250 auf. Zwischen dem Signaleingang 291 und dem zweiten Signalausgang 293 weist die erste Schaltungseinheit 200 eine zweite Pegelerzeugungseinheit 220 zum Erzeugen des zweiten Zwischensignals 260 auf. Ferner umfasst die Schaltungseinheit 200 einen Versorgungsstromanschluss VCC und einen Massepotentialanschluss 0.

Zwischen der ersten Pegelerzeugungseinheit 210 und dem Signaleingang 291 weist die erste Schaltungseinheit 200 ein erstes XOR-Gatter 202 auf, das eingangsseitig mit dem Signaleingang 291 und ausgangsseitig mit einem Eingang der ersten Pegelerzeugungseinheit 210 elektrisch verbunden ist. Über einen weiteren Eingang ist das erste XOR-Gatter 202 negativspannungsseitig über einen steuerbaren Schalter 281 mit dem Massepotentialanschluss 0 und positivspannungsseitig über einen Widerstand 282 mit dem Versorgungsstromanschluss VCC elektrisch verbunden.

Zwischen der zweiten Pegelerzeugungseinheit 220 und dem Signaleingang 291 weist die erste Schaltungseinheit 200 ein zweites XOR-Gatter 203 auf, das eingangsseitig mit dem Signaleingang 291 der ersten Schaltungseinheit 200 und ausgangsseitig mit einem Eingang der zweiten Pegelerzeugungseinheit 220 elektrisch verbunden ist. Über einen weiteren Eingang und den Schalter 281 ist das zweite XOR-Gatter 203 mit dem Massepotentialanschluss 0 und über den Widerstand 282 mit dem Versorgungsstromanschluss VCC elektrisch verbunden.

Bei einem geschlossenen und somit elektrisch leitenden Schaltzustand des Schalters 281 funktioniert das zweite XOR-Gatter 203 so wie ein Inverter, der das Eingangssignal 501 stets bzgl. des logischen Signalpegels invertiert als ein Signal 512 an die zweite Pegelerzeugungseinheit 220 weiterleitet. Dagegen leitet das erste XOR-Gatter 202 im geschlossenen Schaltzustand des Schalters 281 das Eingangssignal 501 bzgl. des logischen Signalpegels unverändert als ein Signal 511 an die erste Pegelerzeugungseinheit 210 weiter. Auf diese Weise liegen an den jeweiligen Eingang der ersten und der zweiten Pegelerzeugungseinheit 210, 220 stets zueinander inverse Signale 511, 512, aus denen dann zwei zueinander inverse Ansteuersignale 502, 503 erzeugt werden, die dann wiederum den ersten und den zweiten Halbleiterschalter 34, 36 einer Halbbrücke zueinander invers schalten können.

Die erste Pegelerzeugungseinheit 210 ist eingerichtet, aus dem von dem ersten XOR-Gatter 202 weitergeleiteten Signal 511 ein erstes Pegelsignal als erstes Zwischensignal 250 mit einem ersten oszillierenden 251 und einem ersten statischen 252 Signalzustand bereitzustellen. Hierzu ist die erste Pegelerzeugungseinheit 210 durch einen ersten (freilaufenden) Oszillator realisiert, der seinerseits durch Zusammenschluss von drei Schmitt-Triggern mit invertierendem Ausgang 211, 212, 214, sowie einem dritten XOR-Gatter 213 ausgebildet ist. Dabei ist das dritte XOR-Gatter 213 eingangsseitig über einen ersten Eingang mit dem Ausgang des ersten XOR-Gatters 202 und über einen zweien Eingang mit dem invertierenden Ausgang eines ersten Schmitt-Triggers 211 elektrisch verbunden. Ausgangsseitig ist das dritte XOR-Gatter 213 mit einem Eingang eines zweiten Schmitt-Triggers 212 und einem Eingang eines dritten Schmitt-Triggers 214 elektrisch verbunden. Der erste Schmitt-Trigger 211 ist eingangsseitig über einen Widerstand mit dem invertierenden Ausgang des zweiten Schmitt-Triggers 212 und über einen Kondensator mit dem Massepotentialanschluss 0 elektrisch verbunden. Der invertierende Ausgang des dritten Schmitt-Triggers 214 ist mit dem ersten Ausgang 292 der ersten Schaltungseinheit 200 elektrisch verbunden.

Analog ist die zweite Pegelerzeugungseinheit 220 eingerichtet, aus dem von dem zweien XOR-Gatter 203 bereitgestellten, durch Invertierung des Eingangssignals 501 ergebenden Signal 512 ein zweites Pegelsignal als zweites Zwischensignal 260 mit einem zweiten oszillierenden 261 und einen zweiten statischen 262 Signalzustand bereitzustellen. Hierzu ist die zweite Pegelerzeugungseinheit 220 ebenfalls durch einen zweiten (freilaufenden) Oszillator realisiert, der seinerseits durch Zusammenschluss von zwei Schmitt-Triggern mit invertierendem Ausgang 221, 223, sowie einem vierten XOR-Gatter 222 gebildet ist. Das vierte XOR-Gatter 222 ist eingangsseitig über einen ersten Eingang mit dem Ausgang des zweiten XOR-Gatters 203, über einen zweiten Eingang mit einem invertierenden Ausgang eines vierten Schmitt-Triggers 221 sowie mit einem Eingang eines fünften Schmitt-Triggers 223 elektrisch verbunden. Über seinen Ausgang ist das vierte XOR-Gatter 222 ausgangsseitig über einen Widerstand mit einem Eingang des vierten Schmitt-Triggers 221 und weiter über einen Kondensator mit dem Massepotentialanschluss 0 elektrisch verbunden. Der invertierende Ausgang des fünften Schmitt-Triggers 223 ist mit dem zweiten Ausgang 293 der ersten Schaltungseinheit 200 elektrisch verbunden.

Die erste Schaltungseinheit 200 dient somit dazu, in Abhängigkeit von dem Signalpegel des Eingangssignals 501 zwei Zwischensignale 250, 260 mit jeweils einem oszillierenden bzw. alternierenden Signalzustand 251, 261 oder einem statischen Signalzustand 252, 262 zu erzeugen.

Figur 4 zeigt die zweite Schaltungseinheit 300 der Steuerschaltung 100 zum Erzeugen des ersten und des zweiten Ansteuersignals 502, 503 aus dem jeweiligen ersten und zweiten Zwischensignal 250, 260.

Die zweite Schaltungseinheit 300 umfasst einen ersten und einen zweiten Signaleingang 301, 302 zum Erhalten des ersten bzw. des zweiten Zwischensignals 250, 260 von der ersten Schaltungseinheit 200 sowie einen ersten und einen zweiten Signalausgang 303, 304 zum Bereitstellen des ersten bzw. des zweiten Ansteuersignals 502, 103. Der erste Signalausgang 303 der zweiten Schaltungseinheit 300 ist direkt mit dem ersten Signalausgang 102 der Steuerschaltung 100 elektrisch verbunden. Analog ist der zweite Signalausgang 304 der zweiten Schaltungseinheit 300 direkt mit dem zweiten Signalausgang 103 der Steuerschaltung 100 elektrisch verbunden.

Zwischen dem ersten Signaleingang 301 und dem ersten Signalausgang 303 weist die zweite Schaltungseinheit 300 eine erste Flankenerkennungseinheit 310 zum Erzeugen des ersten Ansteuersignals 502 aus dem ersten Zwischensignal 250 auf. Zwischen dem zweiten Signaleingang 302 und dem zweien Signalausgang 304 weist die zweite Schaltungseinheit 300 analog eine zweite Flankenerkennungseinheit 320 zum Erzeugen des zweiten Ansteuersignals 503 aus dem zweiten Zwischensignal 260 auf.

Zwischen der ersten Flankenerkennungseinheit 310 und dem ersten Signalausgang 303 weist die zweite Schaltungseinheit 300 ferner ein fünftes XOR-Gatter 350 auf. Das fünfte XOR-Gatter 350 ist über einen ersten Eingang mit einem Ausgang der ersten Flankenerkennungseinheit 310 und über einen Kondensator mit dem Massepotentialanschluss 0 elektrisch verbunden. Über einen zweiten Eingang ist das fünfte XOR-Gatter 350 mit dem Versorgungsstromanschluss VCC elektrisch verbunden. Ausgangsseitig ist das fünfte XOR-Gatter 350 mit dem ersten Ausgangsanschluss 303 der zweiten Schaltungseinheit 300 elektrisch verbunden.

Zwischen der zweiten Flankenerkennungseinheit 320 und dem zweiten Signalausgang 304 weist die zweite Schaltungseinheit 300 zudem ein sechstes XOR-Gatter 340 auf. Das sechste XOR-Gatter 340 ist über einen ersten Eingang mit einem Ausgang der zweiten Flankenerkennungseinheit 320 und über einen Kondensator mit dem Massepotentialanschluss 0 elektrisch verbunden. Über einen zweiten Eingang ist das sechste XOR-Gatter 340 unmittelbar mit dem Massepotentialanschluss 0 elektrisch verbunden. Ausgangsseitig ist das sechste XOR-Gatter 340 mit dem zweiten Ausgangsanschluss 304 der zweiten Schaltungseinheit 300 elektrisch verbunden.

Die erste Flankenerkennungseinheit 310 ist eingerichtet, aus dem ersten Zwischensignal 250 das erste Ansteuersignal 502 bereitzustellen. Hierzu weist die erste Flankenerkennungseinheit 310 ein siebtes XOR-Gatter 313 auf, das eingangsseitig mit jeweils einem invertierenden Ausgang eines von zwei Schmitt-Triggern 311, 312 elektrisch verbunden ist. Dabei ist einer der Schmitt-Trigger 311 eingangsseitig über einen aus einem Widerstand und einem Kondensator bestehenden Tiefpassfilter 315 mit dem ersten Eingang 301 der zweiten Schaltungseinheit 300 elektrisch verbunden. Der andere Schmitt-Trigger 312 ist eingangsseitig direkt mit dem ersten Eingang 301 elektrisch verbunden. Ausgangsseitig ist das siebte XOR-Gatter 313 mit einem Stromverstärker 314 elektrisch verbunden. Der Stromverstärker 314 ist ausgangsseitig mit einem Eingang des fünften XOR-Gatters 350 und über einen Widerstand mit dem Versorgungsstromanschluss VCC sowie über einen Kondensator mit dem Massepotentialanschluss 0 elektrisch verbunden.

Die zweite Flankenerkennungseinheit 320 ist eingerichtet, aus dem zweiten Zwischensignal 260 das zweite Ansteuersignal 503 bereitzustellen. Hierzu weist die zweite Flankenerkennungseinheit 320 ein achtes XOR-Gatter 323 auf, das eingangsseitig mit jeweils einem invertierenden Ausgang eines von zwei Schmitt-Triggern 321, 322 elektrisch verbunden ist. Dabei ist einer der Schmitt-Trigger 321 eingangsseitig über einen aus einem Widerstand und einem Kondensator bestehenden Tiefpassfilter 325 mit dem zweiten Eingang 302 der zweiten Schaltungseinheit 300 elektrisch verbunden. Der andere Schmitt-Trigger 322 ist eingangsseitig direkt mit dem zweiten Eingang 302 elektrisch verbunden. Ausgangsseitig ist das achte XOR-Gatter 323 mit einem Stromverstärker 324 elektrisch verbunden. Der Stromverstärker 324 ist ausgangsseitig mit einem Eingang des sechsten XOR-Gatters 340 und über einen Widerstand mit dem Versorgungsstromanschluss VCC sowie über einen Kondensator mit dem Massepotentialanschluss 0 elektrisch verbunden.

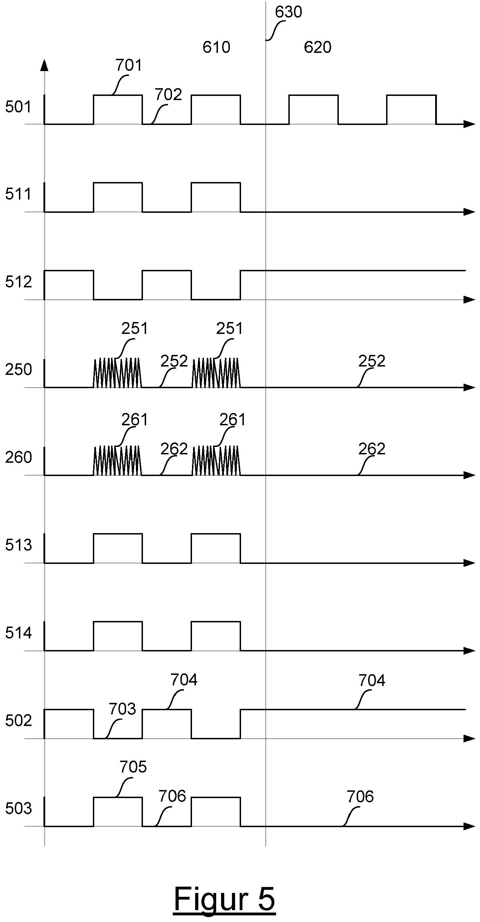

Nachfolgend wird anhand der Figur 5 die Funktionen der Steuerschaltung 100 bzw. der ersten und der zweiten Schaltungseinheit 200, 300 der Steuerschaltung 100 näher beschrieben. Dabei zeigt Figur 5 das Eingangssignal 501, die beiden Ausgangssignale 502, 503, die beiden Zwischensignale 250, 260 sowie weitere Signale 511, 512, 513, 514 an dem jeweiligen Ausgang des ersten bzw. des zweiten XOR-Gatters 202, 203 bzw. dem jeweiligen Ausgang der ersten bzw. der zweiten Flankenerkennungseinheit 310, 320 in vereinfachten schematischen Signaldiagrammen.

Dabei zeigt linker Halbbereich 610 des jeweiligen Signals 501, 511, 512, 250, 260, 513, 514, 502 bzw. 503 dessen jeweiligen Signalzustand in einem fehlerfreien Fall der Steuerschaltung 100 bzw. des Stromrichters 18. Rechter Halbbereich 620 des jeweiligen Signals zeigt dagegen dessen jeweiligen Signalzustand in einem fehlerhaften Fall der Steuerschaltung 100 ab einem Zeitpunkt 630, zu dem eine Signalleitung 800 von dem Signalgenerator 400 zu der Steuerschaltung 100 in angenommener Weise unterbricht und somit die Steuerschaltung 100 das Eingangssignal 501 nicht mehr erhält.

In dem fehlerfreien Zustand der Steuerschaltung 100 bzw. des Stromrichters 18 erhält die Steuerschaltung 100 bzw. die erste Schaltungseinheit 200 von dem Signalgenerator 400 das pulsweitenmodulierte Eingangssignal 501 mit einem ersten Signalzustand 701, bei dem das Eingangssignal 501 einen konstanten Signalpegel entsprechend "logisch Eins" aufweist, und einem zweiten Signalzustand 702, bei dem das Eingangssignal 501 einen konstanten Signalpegel entsprechend "logisch Null" aufweist. In dem geschlossenen und somit elektrisch leitenden Schaltzustand des Schalters 281 funktioniert das erst XOR-Gatter 202 wie ein Signalverstärker und leitet das Eingangssignal 501 als das Signal 511 weiter an die erste Pegelerzeugungseinheit 210, ohne dabei den Signalzustand des Eingangssignals 501 zu ändern. In diesem geschlossenen Schaltzustand des Schalters 281 funktioniert das zweite XOR-Gatter 203 dagegen wie ein Inverter und leitet das Eingangssignal 501 invertiert als das Signal 512 weiter an die zweite Pegelerzeugungseinheit 220.

Aus dem Signal 511 erzeugt die erste Pegelerzeugungseinheit 210 das erste Zwischensignal 250 mit einem ersten oszillierenden Signalzustand 251 und einem ersten statischen Signalzustand 252. Dabei erzeugt die erste Pegelerzeugungseinheit 210 bei einem Signalpegel "logisch Eins" des Signals 511 bzw. bei dem ersten Signalzustand 701 des Eingangssignals 501 das erste Zwischensignal 250 mit dem ersten oszillierenden Signalzustand 251 und bei einem Signalpegel "logisch Null" des Signals 511 bzw. bei dem zweiten Signalzustand 702 des Eingangssignals 501 das erste Zwischensignal 250 mit dem ersten statischen Signalzustand 252.

Aus dem Signal 512 erzeugt die zweite Pegelerzeugungseinheit 220 das zweite Zwischensignal 260 mit einem zweiten oszillierenden Signalzustand 261 und einem zweiten statischen Signalzustand 262. Dabei erzeugt die zweite Pegelerzeugungseinheit 220 bei einem Signalpegel "logisch Null" des Signals 512 und somit bei dem ersten Signalzustand 701 des Eingangssignals 501 mit dem Signalpegel "logisch Eins" das zweite Zwischensignal 260 mit dem zweiten oszillierenden Signalzustand 261 und bei einem Signalpegel "logisch Eins" des Signals 512 und somit bei dem zweiten Signalzustand 702 des Eingangssignals 501 mit dem Signalpegel "logisch Null" das zweite Zwischensignal 260 mit dem zweiten statischen Signalzustand 262.

Die erste und die zweite Flankenerkennungseinheit 310, 320, die weitgehend gleich ausgebildet sind, erzeugen von dem jeweiligen ersten bzw. zweiten Zwischensignal 250, 260 jeweils ein Signal 513 bzw. 514. Dabei erzeugen die beiden Flankenerkennungseinheiten 310, 320 bei einem oszillierenden Signalzustand 251, 261 des jeweiligen ersten bzw. zweiten Zwischensignals 250, 260 jeweils das Signal 513 bzw. 514 mit einem statischen Signalpegel "logisch Eins". Bei einem statischen Signalzustand 252, 262 des jeweiligen ersten bzw. zweiten Zwischensignals 250, 260 erzeugen die beiden Flankenerkennungseinheiten 310, 320 jeweils das Signal 513 bzw. 514 mit einem statischen Signalpegel "logisch Null".

Das Signal 513 wird dann von dem fünften XOR-Gatter 350, der als Inverter funktioniert, invertiert und als das erste Ansteuersignal 502 an den ersten Ausgang 303 der zweiten Schaltungseinheit 300 und somit an den ersten Ausgang 102 der Steuerschaltung 100 zum Ansteuern des negativspannungsseitigen Halbleiterschalters 34 abgegeben. Damit umfasst das erste Ansteuersignal 502 einen ersten statischen Signalzustand 703 mit einem Signalpegel "logisch Null", der dem ersten oszillierenden Signalzustand 251 des ersten Zwischensignals 250 entsprechend erzeugt wird, und einen zweiten statischen Signalzustand 704 mit einem Signalpegel "logisch Eins", der dem ersten statischen Signalzustand 252 des ersten Zwischensignals 250 entsprechend erzeugt wird.

Das Signal 514 wird dagegen von dem sechsten XOR-Gatter 340 unverändert als das zweite Ansteuersignal 503 an den zweiten Ausgang 304 der zweiten Schaltungseinheit 300 und somit an den zweiten Ausgang 103 der Steuerschaltung 100 zum Ansteuern des positivspannungsseitigen Halbleiterschalters 36 abgegeben. Damit umfasst das zweite Ansteuersignal 503 einen ersten statischen Signalzustand 705 mit einem Signalpegel "logisch Eins", der dem zweiten oszillierenden Signalzustand 261 des zweiten Zwischensignals 260 entsprechend erzeugt wird, und einen zweiten statischen Signalzustand 706 mit einem Signalpegel "logisch Null", der dem zweiten statischen Signalzustand 262 des zweiten Zwischensignals 260 entsprechend erzeugt wird.

Durch diese beiden zueinander inversen Ansteuersignale 502, 503 werden der negativspannungsseitige Halbleiterschalter 34 und der positivspannungsseitige Halbleiterschalter 36 zueinander abwechselnd ein- und ausgeschaltet bzw. geschlossen und geöffnet. Da die jeweiligen Halbleiterschalter 34, 36 der verschiedenen Halbbrücke der B6-Brückenschaltung 32 zeitlich versetzt ein- und ausgeschaltet werden, wird die elektrische Maschine 12 mit Phasenströmen 26 versorgt, die sich zueinander zeitlich versetzt in die Wicklungen der elektrischen Maschine 12 hineinfließen.

Unterbricht jedoch zu dem angenommenen Zeitpunkt 630 die Signalverbindung von dem Signalgenerator 400 zu der Steuerschaltung 100, so gelangt das von dem Signalgenerator 400 generierte pulsweitenmodulierte Eingangssignal 501 nicht mehr zu der Steuerschaltung 100 und folglich bleibt das Signal 511 aus dem ersten XOR-Gatter 202 bei einem Signalpegel "logisch Null". Das Signal 512 aus dem zweiten XOR-Gatter 203 wird dagegen durch Invertierung durch das zweite XOR-Gatter 203 bei einem Signalpegel "logisch Eins" gehalten.

Da die erste Pegelerzeugungseinheit 210 nur bei einem Signalpegel "logisch Eins" bei dem Signal 511 das erste Zwischensignal 250 mit dem ersten oszillierenden Signalzustand 251 erzeugt, bleibt das erste Zwischensignal 250 bei dem Signalpegel "logisch Null" des Signals 511 in dem ersten statischen Signalzustand 252 gehalten. Da die zweite Pegelerzeugungseinheit 220 dagegen nur bei einem Signalpegel "logisch Null" bei dem Signal 512 das zweite Zwischensignal 260 mit dem zweiten oszillierenden Signalzustand 261 erzeugt, bleibt das zweite Zwischensignal 260 bei dem Signalpegel "logisch Eins" des Signals 512 in dem zweiten statischen Signalzustand 262 gehalten.

Folglich erkennen die erste und die zweite Flankenerkennungseinheit 310, 320 keine Signalflanken bzw. Pegeländerungen in dem ersten und dem zweiten Zwischensignal 250, 260 und geben so jeweils das Signal 513 bzw. das Signal 514 mit einem Signalpegel "logisch Null" aus an das jeweilige fünfte bzw. sechste XOR-Gatter 350, 340.

Das als Inverter funktionierende fünfte XOR-Gatter 350 erzeugt dann aus dem Signal 513 mit dem Signalpegel "logisch Null" das erste Ansteuersignal 502 mit einem konstanten Signalpegel "logisch Eins" und leitet dieses erste Ansteuersignal 502 dem negativspannungsseitigen Halbleiterschalter 34 weiter. Von diesem ersten Ansteuersignal 502 mit dem konstanten Signalpegel "logisch Eins" gesteuert schaltet der Halbleiterschalter 34 ein und verbindet so eine entsprechende Stromphase 24 und somit eine entsprechende Wicklung der elektrischen Maschine 12 mit dem Massepotentialanschluss 0 elektrisch.

Das sechste XOR-Gatter 360 leitet dagegen das Signal 514 mit dem konstanten Signalpegel "logisch Null" als das zweite Ansteuersignal 503 weiter zu dem positivspannungsseitigen Halbeleiterschalter 36. Von diesem zweiten Ansteuersignal 503 mit dem konstanten Signalpegel "logisch Null" gesteuert schaltet der Halbleiterschalter 36 aus und verhindert so einerseits einen elektrischen Kurzschluss in der Halbbrücke zwischen dem negativspannungsseitigen und dem positivspannungsseitigen Halbleiterschalter 34, 36 und unterbricht anderseits die elektrische Verbindung von dem Stromrichter 18 zu der elektrischen Maschine 12.

Die beiden in Figur 2 dargestellten weiteren Steuerschaltungen 100 für weitere nieder- und positivspannungsseitigen Halbleiterschalter 34, 36 der beiden weiteren Halbbrücken der B6-Brückenschaltung 32 funktionieren sowohl im fehlerfreien als auch im fehlerhaften Fall weitgehend gleich wie die oben detailliert beschriebene Steuerschaltung 100.

Auf diese Weise wird ein sicherer Schaltzustand bei den drei negativspannungsseitigen und bei den drei positivspannungsseitigen Halbleiterschalter 34, 36 erreicht, bei dem alle drei negativspannungsseitigen Halbleiterschalter 34 geschlossen und somit stromleitend geschaltet sind und alle drei positivspannungsseitigen Halbleiterschalter 36 geöffnet und somit stromsperrend geschaltet sind. Damit ist einerseits Stromfluss von der elektrischen Maschine 12 zurück zu dem Stromrichter 18 verhindert und andererseits wird verhindert, dass sich in den Wicklungen der sich möglicherweise noch drehenden und somit als Gengerator arbeitenden elektrischen Maschine 12 keine Überspannungen bilden, die die elektrische Maschine 12 bzw. den Stromrichter 18 gefährden können.

Durch Öffnen des Schalters 281 lässt sich bei Bedarf ein Brückenkurzschluss einer Halbbrücke über den geschlossenen negativspannungsseitigen Halbleiterschalter 34 und den geschlossenen positivspannungsseitigen Halbleiterschalter 36 realisieren.

## Patentansprüche

1. Stromrichter (18) zum Ansteuern einer elektrischen Maschine (12), wobei der Stromrichter (18) folgende Merkmale aufweist:
- einen ersten Halbleiterschalter (34),
- eine Steuerschaltung (100) zum Ansteuern des ersten Halbleiterschalters (34), umfassend:
• einen Signaleingang (101) zum Empfangen eines Eingangssignals (501) mit einem ersten (701) und einen zweitem (702) Signalzustand,
• eine erste Schaltungseinheit (200) zum Erzeugen eines ersten Zwischensignals (250) mit einem ersten oszillierenden (251) und einem ersten statischen (252) Signalzustand basierend auf dem Eingangssignal (501), und
• eine zweite Schaltungseinheit (300) zum Erzeugen eines ersten Ansteuersignals (502) mit einem dritten (703) und einem vierten (704) Signalzustand basierend auf dem ersten Zwischensignal (250) zum Ansteuern des ersten Halbleiterschalters (34),
- wobei die erste Schaltungseinheit (200) ausgeführt ist, bei dem ersten Signalzustand (701) des Eingangssignals (501) das erste Zwischensignal (250) mit dem ersten oszillierenden Signalzustand (251), und bei dem zweiten Signalzustand (702) des Eingangssignals (501) das erste Zwischensignal (250) mit dem ersten statischen Signalzustand (252) zu erzeugen, und
- die zweite Schaltungseinheit (300) ausgeführt ist, bei dem ersten oszillierenden Signalzustand (251) des ersten Zwischensignals (250) das erste Ansteuersignal (502) mit dem dritten Signalzustand (703), und bei dem ersten statischen Signalzustand (252) des ersten Zwischensignals (250) das erste Ansteuersignal (502) mit dem vierten Signalzustand (704) zu erzeugen;
- einen zweiten Halbleiterschalter (36),
- die zweite Schaltungseinheit (300) ferner zum Erzeugen eines zweiten Ansteuersignals (503) mit einem fünften (705) und einem sechsten (706) Signalzustand basierend auf dem ersten Zwischensignal (250) zum Ansteuern des zweiten Halbleiterschalters (36) ausgebildet ist, und
- die zweite Schaltungseinheit (300) ferner ausgeführt ist, bei dem ersten oszillierenden Signalzustand (251) des ersten Zwischensignals (250) das zweite Ansteuersignal (503) mit dem fünften Signalzustand (705), und bei dem ersten statischen Signalzustand (252) des Zwischensignals (250) das zweite Ansteuersignal (503) mit dem sechsten Signalzustand (706) zu erzeugen,
**dadurch gekennzeichnet, dass**
- die zweite Schaltungseinheit (300) ferner eine Invertierungseinheit (350) aufweist, wobei die Invertierungseinheit (350) ausgeführt ist, das zweite Ansteuersignal (503) gegenüber dem ersten Ansteuersignal (502) stets zu invertieren.

2. Stromrichter (18) zum Ansteuern einer elektrischen Maschine (12), wobei der Stromrichter (18) folgende Merkmale aufweist:
- einen ersten Halbleiterschalter (34),
- eine Steuerschaltung (100) zum Ansteuern des ersten Halbleiterschalters (34), umfassend:
• einen Signaleingang (101) zum Empfangen eines Eingangssignals (501) mit einem ersten (701) und einen zweitem (702) Signalzustand,
• eine erste Schaltungseinheit (200) zum Erzeugen eines ersten Zwischensignals (250) mit einem ersten oszillierenden (251) und einem ersten statischen (252) Signalzustand basierend auf dem Eingangssignal (501), und
• eine zweite Schaltungseinheit (300) zum Erzeugen eines ersten Ansteuersignals (502) mit einem dritten (703) und einem vierten (704) Signalzustand basierend auf dem ersten Zwischensignal (250) zum Ansteuern des ersten Halbleiterschalters (34),
- wobei die erste Schaltungseinheit (200) ausgeführt ist, bei dem ersten Signalzustand (701) des Eingangssignals (501) das erste Zwischensignal (250) mit dem ersten oszillierenden Signalzustand (251), und bei dem zweiten Signalzustand (702) des Eingangssignals (501) das erste Zwischensignal (250) mit dem ersten statischen Signalzustand (252) zu erzeugen, und
- die zweite Schaltungseinheit (300) ausgeführt ist, bei dem ersten oszillierenden Signalzustand (251) des ersten Zwischensignals (250) das erste Ansteuersignal (502) mit dem dritten Signalzustand (703), und bei dem ersten statischen Signalzustand (252) des ersten Zwischensignals (250) das erste Ansteuersignal (502) mit dem vierten Signalzustand (704) zu erzeugen;
- den zweiten Halbleiterschalter (36),
- die erste Schaltungseinheit (200) ferner zum Erzeugen eines zweiten Zwischensignals (260) mit einem zweiten oszillierenden (261) und einem zweiten statischen (262) Signalzustand basierend auf dem Eingangssignal (501) ausgebildet ist, und
- die zweite Schaltungseinheit (300) ferner zum Erzeugen des zweiten Ansteuersignals (503) mit dem fünften (705) und dem sechsten (706) Signalzustand basierend auf dem zweiten Zwischensignal (260) zum Ansteuern des zweiten Halbleiterschalters (36) ausgebildet ist, und
- die erste Schaltungseinheit (200) ferner ausgeführt ist, bei dem ersten Signalzustand (701) des Eingangssignals (501) das zweite Zwischensignal (260) mit dem zweiten oszillierenden Signalzustand (261), und bei dem zweiten Signalzustand (702) des Eingangssignals (501) das zweite Zwischensignal (260) mit dem zweiten statischen Signalzustand (262) zu erzeugen, und
- die zweite Schaltungseinheit (300) ferner ausgeführt ist, bei dem zweiten oszillierenden Signalzustand (261) des zweiten Zwischensignals (260) das zweite Ansteuersignal (503) mit dem fünften Signalzustand (705), und bei dem zweiten statischen Signalzustand (262) des zweiten Zwischensignals (260) das zweite Ansteuersignal (503) mit dem sechsten Signalzustand (706) zu erzeugen,
**dadurch gekennzeichnet, dass**
- die zweite Schaltungseinheit (300) ferner eine Invertierungseinheit (350) aufweist, wobei die Invertierungseinheit (350) ausgeführt ist, das zweite Ansteuersignal (503) gegenüber dem ersten Ansteuersignal (502) stets zu invertieren.

3. Stromrichter (18) nach Anspruch 1 oder 2, wobei die Invertierungseinheit (350) ein XOR-Gatter umfasst.

4. Stromrichter (18) nach einem der vorstehenden Ansprüche, wobei der erste Halbleiterschalter (34) ausgeführt ist, bei dem dritten Signalzustand (703) des ersten Ansteuersignals (502) einen offenen stromsperrenden Schaltzustand, und bei dem vierten Signalzustand (704) des ersten Ansteuersignals (502) einen geschlossenen stromleitenden Schaltzustand einzunehmen.

5. Stromrichter (18) nach Anspruch 4, wobei die zweite Schaltungseinheit (300) ferner ausgeführt ist, beim Wegfall des ersten Zwischensignals (250) das erste Ansteuersignal (502) mit dem vierten Signalzustand (704) zu erzeugen.

6. Stromrichter (18) nach einem der vorstehenden Ansprüche, wobei der zweite Halbleiterschalter (36) ausgeführt ist, bei dem fünften Signalzustand (705) des zweiten Ansteuersignals (503) einen geschlossenen stromleitenden Schaltzustand, und bei dem sechsten Signalzustand (706) des zweiten Ansteuersignals (503) einen offenen stromsperrenden Schaltzustand einzunehmen.

7. Stromrichter (18) nach Anspruch 6, wobei die zweite Schaltungseinheit (300) ferner ausgeführt ist, beim Wegfall des ersten Zwischensignals (250) und/oder des zweiten Zwischensignals (260) das zweite Ansteuersignal (503) mit dem sechsten Signalzustand (706) zu erzeugen.

8. Fahrzeug (10) mit einer elektrischen Maschine (12) zum Antrieb, wobei das Fahrzeug (10) einen Stromrichter (18) nach einem der vorstehenden Ansprüche zum Ansteuern der elektrischen Maschine (12) aufweist.

## Claims

1. Converter (18) for driving an electrical machine (12), wherein the converter (18) has the following features:
- a first semiconductor switch (34),
- a control circuit (100) for driving the first semiconductor switch (34), comprising:
• a signal input (101) for receiving an input signal (501) with a first (701) and a second (702) signal state,
• a first circuit unit (200) for generating a first intermediate signal (250) with a first oscillating (251) and a first static (252) signal state on the basis of the input signal (501), and
• a second circuit unit (300) for generating a first drive signal (502) with a third (703) and a fourth (704) signal state on the basis of the first intermediate signal (250) for driving the first semiconductor switch (34),
- wherein the first circuit unit (200) is configured to generate the first intermediate signal (250) with the first oscillating signal state (251) in the case of the first signal state (701) of the input signal (501), and to generate the first intermediate signal (250) with the first static signal state (252) in the case of the second signal state (702) of the input signal (501), and
- the second circuit unit (300) is configured to generate the first drive signal (502) with the third signal state (703) in the case of the first oscillating signal state (251) of the first intermediate signal (250), and to generate the first drive signal (502) with the fourth signal state (704) in the case of the first static signal state (252) of the first intermediate signal (250);
- a second semiconductor switch (36),
- the second circuit unit (300) is furthermore designed for generating a second drive signal (503) with a fifth (705) and a sixth (706) signal state on the basis of the first intermediate signal (250) for driving the second semiconductor switch (36), and
- the second circuit unit (300) is furthermore configured to generate the second drive signal (503) with the fifth signal state (705) in the case of the first oscillating signal state (251) of the first intermediate signal (250), and to generate the second drive signal (503) with the sixth signal state (706) in the case of the first static signal state (252) of the intermediate signal (250),
**characterized in that**
- the second circuit unit (300) furthermore comprises an inversion unit (350), wherein the inversion unit (350) is configured always to invert the second drive signal (503) with respect to the first drive signal (502).

2. Converter (18) for driving an electrical machine (12), wherein the converter (18) has the following features:
- a first semiconductor switch (34),
- a control circuit (100) for driving the first semiconductor switch (34), comprising:
• a signal input (101) for receiving an input signal (501) with a first (701) and a second (702) signal state,
• a first circuit unit (200) for generating a first intermediate signal (250) with a first oscillating (251) and a first static (252) signal state on the basis of the input signal (501), and
• a second circuit unit (300) for generating a first drive signal (502) with a third (703) and a fourth (704) signal state on the basis of the first intermediate signal (250) for driving the first semiconductor switch (34),
- wherein the first circuit unit (200) is configured to generate the first intermediate signal (250) with the first oscillating signal state (251) in the case of the first signal state (701) of the input signal (501), and to generate the first intermediate signal (250) with the first static signal state (252) in the case of the second signal state (702) of the input signal (501), and
- the second circuit unit (300) is configured to generate the first drive signal (502) with the third signal state (703) in the case of the first oscillating signal state (251) of the first intermediate signal (250), and to generate the first drive signal (502) with the fourth signal state (704) in the case of the first static signal state (252) of the first intermediate signal (250);
- the second semiconductor switch (36),
- the first circuit unit (200) is furthermore designed for generating a second intermediate signal (260) with a second oscillating (261) and a second static (262) signal state on the basis of the input signal (501), and
- the second circuit unit (300) is furthermore designed for generating the second drive signal (503) with the fifth (705) and the sixth (706) signal state on the basis of the second intermediate signal (260) for driving the second semiconductor switch (36), and
- the first circuit unit (200) is furthermore configured to generate the second intermediate signal (260) with the second oscillating signal state (261) in the case of the first signal state (701) of the input signal (501), and to generate the second intermediate signal (260) with the second static signal state (262) in the case of the second signal state (702) of the input signal (501), and
- the second circuit unit (300) is furthermore configured to generate the second drive signal (503) with the fifth signal state (705) in the case of the second oscillating signal state (261) of the second intermediate signal (260), and to generate the second drive signal (503) with the sixth signal state (706) in the case of the second static signal state (262) of the second intermediate signal (260),
**characterized in that**
- the second circuit unit (300) furthermore comprises an inversion unit (350), wherein the inversion unit (350) is configured always to invert the second drive signal (503) with respect to the first drive signal (502).

3. Converter (18) according to Claim 1 or 2, wherein the inversion unit (350) comprises an XOR gate.

4. Converter (18) according to any of the preceding claims, wherein the first semiconductor switch (34) is configured to assume an open current-blocking switching state in the case of the third signal state (703) of the first drive signal (502), and to assume a closed current-conducting switching state in the case of the fourth signal state (704) of the first drive signal (502).

5. Converter (18) according to Claim 4, wherein the second circuit unit (300) is furthermore configured to generate the first drive signal (502) with the fourth signal state (704) in the event of cessation of the first intermediate signal (250).

6. Converter (18) according to any of the preceding claims, wherein the second semiconductor switch (36) is configured to assume a closed current-conducting switching state in the case of the fifth signal state (705) of the second drive signal (503), and to assume an open current-blocking switching state in the case of the sixth signal state (706) of the second drive signal (503) .

7. Converter (18) according to Claim 6, wherein the second circuit unit (300) is furthermore configured to generate the second drive signal (503) with the sixth signal state (706) in the event of cessation of the first intermediate signal (250) and/or of the second intermediate signal (260) .

8. Vehicle (10) having an electrical machine (12) for drive purposes, wherein the vehicle (10) comprises a converter (18) according to any of the preceding claims for driving the electrical machine (12).

## Revendications

1. Convertisseur statique (18) destiné à exciter une machine électrique (12), le convertisseur statique (18) possédant les caractéristiques suivantes :
- un premier commutateur semiconducteur (34),
- un circuit de commande (100) destiné à attaquer le premier commutateur semiconducteur (34), comprenant :
* une entrée de signal (101) destinée à recevoir un signal d'entrée (501) ayant un premier (701) et un deuxième (702) état de signal,
* une première unité de commutation (200) destinée à générer un premier signal intermédiaire (250) ayant un premier état de signal oscillant (251) et un premier état de signal statique (252) basés sur le signal d'entrée (501), et
* une deuxième unité de commutation (300) destinée à générer un premier signal d'attaque (502) ayant un troisième (703) et un quatrième (704) état de signal basés sur le premier signal intermédiaire (250) en vue d'attaquer le premier commutateur semiconducteur (34),
- la première unité de commutation (200) étant configurée pour, en présence du premier état de signal (701) du signal d'entrée (501), générer le premier signal intermédiaire (250) avec le premier état de signal oscillant (251) et, en présence du deuxième état de signal (702) du signal d'entrée (501), générer le premier signal intermédiaire (250) avec le premier état de signal statique (252), et
- la deuxième unité de commutation (300) étant configurée pour, en présence du premier état de signal oscillant (251) du premier signal intermédiaire (250), générer le premier signal d'attaque (502) avec le troisième état de signal (703) et, en présence du premier état de signal statique (252) du premier signal intermédiaire (250), générer le premier signal d'attaque (502) avec le quatrième état de signal (704) ;
- un deuxième commutateur semiconducteur (36),
- la deuxième unité de commutation (300) étant en outre configurée pour générer un deuxième signal d'attaque (503) ayant un cinquième (705) et un sixième (706) état de signal basés sur le premier signal intermédiaire (250) en vue d'attaquer le deuxième commutateur semiconducteur (36), et
- la deuxième unité de commutation (300) étant en outre configurée pour, en présence du premier état de signal oscillant (251) du premier signal intermédiaire (250), générer le deuxième signal d'attaque (503) avec le cinquième état de signal (705) et, en présence du premier état de signal statique (252) du premier signal intermédiaire (250), générer le deuxième signal d'attaque (503) avec le sixième état de signal (706), **caractérisé en ce que**
- la deuxième unité de commutation (300) possède en outre une unité d'inversion (350), l'unité d'inversion (350) étant configurée pour toujours inverser le deuxième signal d'attaque (503) par rapport au premier signal d'attaque (502).

2. Convertisseur statique (18) destiné à exciter une machine électrique (12), le convertisseur statique (18) possédant les caractéristiques suivantes :
- un premier commutateur semiconducteur (34),
- un circuit de commande (100) destiné à attaquer le premier commutateur semiconducteur (34), comprenant :
* une entrée de signal (101) destinée à recevoir un signal d'entrée (501) ayant un premier (701) et un deuxième (702) état de signal,
* une première unité de commutation (200) destinée à générer un premier signal intermédiaire (250) ayant un premier état de signal oscillant (251) et un premier état de signal statique (252) basés sur le signal d'entrée (501), et
* une deuxième unité de commutation (300) destinée à générer un premier signal d'attaque (502) ayant un troisième (703) et un quatrième (704) état de signal basés sur le premier signal intermédiaire (250) en vue d'attaquer le premier commutateur semiconducteur (34),
- la première unité de commutation (200) étant configurée pour, en présence du premier état de signal (701) du signal d'entrée (501), générer le premier signal intermédiaire (250) avec le premier état de signal oscillant (251) et, en présence du deuxième état de signal (702) du signal d'entrée (501), générer le premier signal intermédiaire (250) avec le premier état de signal statique (252), et
- la deuxième unité de commutation (300) étant configurée pour, en présence du premier état de signal oscillant (251) du premier signal intermédiaire (250), générer le premier signal d'attaque (502) avec le troisième état de signal (703) et, en présence du premier état de signal statique (252) du premier signal intermédiaire (250), générer le premier signal d'attaque (502) avec le quatrième état de signal (704) ;
- un deuxième commutateur semiconducteur (36),
- la première unité de commutation (200) étant en outre configurée pour générer un deuxième signal intermédiaire (260) ayant un deuxième état de signal oscillant (261) et un deuxième état de signal statique (262) basés sur le signal d'entrée (501), et
- la deuxième unité de commutation (300) étant en outre configurée pour générer le deuxième signal d'attaque (503) ayant le cinquième (705) et le sixième (706) état de signal basés sur le deuxième signal intermédiaire (260) en vue d'attaquer le deuxième commutateur semiconducteur (36), et
- la première unité de commutation (200) étant en outre configurée pour, en présence du premier état de signal (701) du signal d'entrée (501), générer le deuxième signal intermédiaire (260) avec le deuxième état de signal oscillant (261) et, en présence du deuxième état de signal (702) du signal d'entrée (501), générer le deuxième signal intermédiaire (260) avec le deuxième état de signal statique (262), et
- la deuxième unité de commutation (300) étant en outre configurée pour, en présence du deuxième état de signal oscillant (261) du deuxième signal intermédiaire (260), générer le deuxième signal d'attaque (503) avec le cinquième état de signal (705) et, en présence du deuxième état de signal statique (262) du deuxième signal intermédiaire (260), générer le deuxième signal d'attaque (503) avec le sixième état de signal (706), **caractérisé en ce que**
- la deuxième unité de commutation (300) possède en outre une unité d'inversion (350), l'unité d'inversion (350) étant configurée pour toujours inverser le deuxième signal d'attaque (503) par rapport au premier signal d'attaque (502).

3. Convertisseur statique (18) selon la revendication 1 ou 2, l'unité d'inversion (350) comprenant une porte XOR.

4. Convertisseur statique (18) selon l'une des revendications précédentes, le premier commutateur semiconducteur (34) étant configuré pour, en présence du troisième état de signal (703) du premier signal d'attaque (502), adopter un état de commutation ouvert de blocage du courant et, en présence du quatrième état de signal (704) du premier signal d'attaque (502), adopter un état de commutation fermé de passage du courant.

5. Convertisseur statique (18) selon la revendication 4, la deuxième unité de commutation (300) étant en outre configurée pour, en cas de disparition du premier signal intermédiaire (250), générer le premier signal d'attaque (502) avec le quatrième état de signal (704).

6. Convertisseur statique (18) selon l'une des revendications précédentes, le deuxième commutateur semiconducteur (36) étant configuré pour, en présence du cinquième état de signal (705) du deuxième signal d'attaque (503), adopter un état de commutation fermé de passage du courant et, en présence du sixième état de signal (706) du deuxième signal d'attaque (503), adopter un état de commutation ouvert de blocage du courant.

7. Convertisseur statique (18) selon la revendication 6, la deuxième unité de commutation (300) étant en outre configurée pour, en cas de disparition du premier signal intermédiaire (250) et/ou deuxième signal intermédiaire (260), générer le deuxième signal d'attaque (503) avec le sixième état de signal (706).

8. Véhicule (10) comprenant une machine électrique (12) destinée à la propulsion, le véhicule (10) comprenant un convertisseur statique (18) selon l'une des revendications précédentes destiné à exciter la machine électrique (12).
